# EUROPÄISCHE PATENTSCHRIFT

(11) **EP 3 762 184 B1**
(45) Veröffentlichungstag und Bekanntmachung des Hinweises auf die Patenterteilung: **01.05.2024**
(21) Anmeldenummer: 19709650.6
(22) Anmeldetag: 01.03.2019
(51) Int. Cl.: B25J 9/00, B25J 19/02, B05B 13/02, B25J 15/00, B25J 19/00

(54) **SCHWENKEINHEIT FÜR EINEN HANDHABUNGSROBOTER UND ZUGEHÖRIGES VERFAHREN**
PIVOTING UNIT FOR A HANDLING ROBOT AND ASSOCIATED METHOD
UNITÉ DE PIVOTEMENT DESTINÉE À UN ROBOT MANIPULATEUR ET PROCÉDÉ ASSOCIÉ

(30) Priorität: 06.03.2018 DE 102018105041
(43) Veröffentlichungstag der Anmeldung: 13.01.2021
(73) Patentinhaber: Dürr Systems AG, 74321 Bietigheim-Bissingen (DE)
(72) Erfinder: HANNIG, Detlev, 73650 Winterbach (DE)
(74) Vertreter: v. Bezold & Partner Patentanwälte - PartG mbB
(86) Internationale Anmeldenummer: PCT/EP2019/055085
(87) Internationale Veröffentlichungsnummer: WO 2019/170527

(56) Entgegenhaltungen:
- EP-A1- 2 251 252
- EP-A1- 2 497 576
- DE-A1-102014 017 855
- US-A1- 2012 163 948

## Beschreibung

Die Erfindung betrifft eine Schwenkeinheit für einen Handhabungsroboter (z. B. Türöffnerroboter) und ein entsprechendes Verfahren zum Öffnen bzw. Schließen einer Klappe (z. B. Tür) einer Kraftfahrzeugkarosserie.

Aus DE 10 2014 017 855 A1 ist ein Türöffnerroboter bekannt, der in einer Lackieranlage eingesetzt wird, um die Türen der zu lackierenden Kraftfahrzeugkarosserien im Rahmen eines Lackiervorgangs zu öffnen, damit auch der Innenraum der Kraftfahrzeugkarosserien lackiert werden kann. Der bekannte Türöffnerroboter ist als SCARA-Roboter (SCARA: Selective Compliance Assembly Robot Arm) ausgebildet und trägt an einem schwenkbaren Greifarm als Greifwerkzeug einen Spitzengreifer, der in einen Eingriff (z. B. Fensterspalt, Ring) der zu öffnenden Tür eingeführt werden kann, um die Tür zum Öffnen bzw. Schließen zu greifen. Das Greifwerkzeug (z. B. Spitzengreifer) wird hierbei also von oben nach unten in den Eingriff (z. B. Ring, Fensterspalt) der Tür eingeführt. Dadurch eignet sich der bekannte Türöffnerroboter jedoch nur zum Öffnen bzw. Schließen normaler Fahrzeugtüren, wohingegen zum Öffnen bzw. Schließen von Schiebetüren SCARA-Roboter nicht ohne weiteres eingesetzt werden können, sondern 6-Achs-Roboter benötigt werden, die deutlich komplexer sind und einen größeren Bauraum benötigen.

US 2012/0163948 A1 zeigt einen Handhabungsroboter mit einer integrierten Schwenkeinheit, die zum Öffnen einer Klappe einer Kraftfahrzeugkarosserie dient. Der Handhabungsroboter weist einen Greifarm mit einem ersten Greifwerkzeug und einem zweiten Greifwerkzeug auf, die ausgestaltet sind, in unterschiedlichen Einführrichtungen in Eingriffe an der zu öffnenden Klappe der Kraftfahrzeugkarosserie eingeführt zu werden. Allerdings offenbart diese Druckschrift keinen Schwenkkopf zum Schwenken des Greifarms relativ zu dem Montageflansch. Die Schwenkeinheit dieses bekannten Handhabungsroboters ist also nicht zur Montage an einem Handhabungsroboter geeignet, sondern in den Handhabungsroboter integriert.

Ferner sind aus EP 2 497 576 A1 Handhabungsroboter bekannt, die Greifwerkzeuge zum Öffnen bzw. Schließen von Türen oder Hauben einer Kraftfahrzeugkarosserie tragen. Auch hierbei ist an dem Handhabungsroboter keine Schwenkeinheit montiert, so dass die Schwenkbewegungen von dem Handhabungsroboter selbst ausgeführt werden.

Der Erfindung liegt deshalb die Aufgabe zugrunde, dieses Problem zu lösen, damit SCARA-Roboter auch zum Öffnen und Schließen von Schiebetüren eingesetzt werden können.

Diese Aufgabe wird durch eine erfindungsgemäße Schwenkeinheit für einen Handhabungsroboter und durch ein entsprechendes Verfahren gemäß den unabhängigen Ansprüchen gelöst.

Die Erfindung sieht zunächst eine Schwenkeinheit vor, die an einem Handhabungsroboter (z. B. Türöffnerroboter) zum Öffnen bzw. Schließen einer Klappe (z. B. Tür) einer Kraftfahrzeugkarosserie montiert werden kann.

Die erfindungsgemäße Schwenkeinheit weist in Übereinstimmung mit dem Stand der Technik zunächst einen Montageflansch auf, mit dem die Schwenkeinheit an dem Handhabungsroboter (z. B. Türöffnerroboter) montiert werden kann, beispielsweise durch eine Schraubverbindung. Der im Rahmen der Erfindung verwendete Begriff eines Montageflansches ist jedoch nicht beschränkt auf eine plattenförmige Montageschnittstelle zwischen der Schwenkeinheit und dem Handhabungsroboter. Entscheidend ist lediglich, dass die Schwenkeinheit von dem Handhabungsroboter geführt wird. Die Schwenkeinheit kann also auch baulich in den Handhabungsroboter integriert sein.

Darüber hinaus weist die Schwenkeinheit einen schwenkbaren Greifarm auf, wie es auch bei dem eingangs beschriebenen bekannten Handhabungsroboter gemäß DE 10 2014 017 855 A1 der Fall ist.

An diesem Greifarm ist in Übereinstimmung mit dem Stand der Technik ein erstes Greifwerkzeug (z. B. Spitzengreifer) angebracht, um einen Eingriff (z. B. Fensterspalt, Ring) an der zu öffnenden Klappe (z. B. Tür) der Kraftfahrzeugkarosserie zu greifen, damit der Handhabungsroboter die Klappe öffnen kann. Vorzugsweise ist dieses erste Greifwerkzeug am Ende des Greifarms angeordnet, jedoch kann das erste Greifwerkzeug grundsätzlich auch an anderen Stellen des Greifarms angeordnet sein.

Weiterhin umfasst die erfindungsgemäße Schwenkeinheit einen Schwenkkopf zum Schwenken des Greifarms mit dem ersten Greifwerkzeug relativ zu dem Montageflansch zwischen einer Ausgangsstellung und einer Eingriffsstellung. In der Ausgangsstellung greift das erste Greifwerkzeug nicht in den Eingriff (z. B. Ring, Fensterspalt) an der zu öffnenden bzw. zu schließenden Klappe (z. B. Tür) der Kraftfahrzeugkarosserie ein. In der Eingriffsstellung greift das erste Greifwerkzeug dagegen in den Eingriff an der zu öffnenden bzw. zu schließenden Klappe der Kraftfahrzeugkarosserie ein, so dass der Handhabungsroboter die Klappe öffnen bzw. schließen kann.

Der im Rahmen der Erfindung verwendete Begriff eines Schwenkkopfs impliziert nicht notwendigerweise eine kopfförmige äußere Gestaltung des Schwenkkopfs. Vielmehr handelt es sich bei dem Schwenkkopf einfach um ein Schwenkgelenk, das in seinem Gehäuse auch weitere Bauteile enthalten.

Insoweit entspricht der erfindungsgemäße Schwenkkopf der Schwenkeinheit bei dem eingangs beschriebenen bekannten Türöffnerroboter gemäß DE 10 2014 017 855 A1.

Die erfindungsgemäße Schwenkeinheit zeichnet sich nun gegenüber dem Stand der Technik dadurch aus, dass an dem Greifarm auch ein zweites Greifwerkzeug (z. B. Spitzengreifer) zum Greifen eines Eingriffs (z. B. Ring) an der zu öffnenden Klappe (z. B. Tür) der Kraftfahrzeugkarosserie montiert ist. Vorzugsweise ist auch dieses zweite Greifwerkzeug am Ende des Greifarms angeordnet, jedoch sind grundsätzlich auch andere Montageorte an dem Greifarm möglich.

Die beiden Greifwerkzeuge an dem Greifarm sind nun so ausgelegt, dass sie in unterschiedlichen Einführrichtungen in den Eingriff an der zu öffnenden Klappe (z. B. Tür) der Kraftfahrzeugkarosserie eingeführt werden. Beispielsweise kann das erste Greifwerkzeug in herkömmlicher Weise von oben nach unten in einen Eingriff (z. B. Fensterspalt) einer zu öffnenden Tür eingeführt werden. Das zweite Greifwerkzeug kann dann beispielsweise von unten nach oben in den Eingriff (z. B. Ring) an der zu öffnenden Klappe (z. B. Tür) eingeführt werden. Die beiden Greifwerkzeuge unterscheiden sich also durch unterschiedliche und vorzugsweise entgegengesetzte Einführrichtungen in Bezug auf den Eingriff an der zu öffnenden Klappe (z. B. Tür). Dadurch eignet sich ein Handhabungsroboter mit der erfindungsgemäßen Schwenkeinheit sowohl zum Öffnen herkömmlicher Kraftfahrzeugtüren als auch zum Öffnen von Schiebetüren von Kraftfahrzeugkarosserien.

Erfindungsgemäß handelt es sich bei den beiden Greifwerkzeugen um Spitzengreifer, die in entgegengesetzten Richtungen von dem Greifarm abstehen, beispielsweise nach oben bzw. nach unten. Derartige Spitzengreifer sind an sich aus DE 10 2014 017 855 A1 bekannt und müssen deshalb an sich nicht näher beschrieben werden. Es ist in dieser Stelle lediglich zu erwähnen, dass die Spitzengreifer vorzugsweise dornförmig oder stiftförmig sind, um in den Eingriff (z. B. Fensterspalt, Ring) an der zu öffnenden Klappe (z. B. Tür) eingeführt werden zu können.

In einem bevorzugten Ausführungsbeispiel der Erfindung weist der Schwenkkopf einen Schwenkantrieb auf, um den Greifarm zu schwenken. Beispielsweise kann dieser Schwenkantrieb einen Pneumatikzylinder aufweisen. Es ist jedoch grundsätzlich auch möglich, dass der Schwenkantrieb einen Elektromotor oder einen Hydraulikzylinder aufweist.

Darüber hinaus umfasst der Schwenkkopf bei der erfindungsgemäßen Schwenkeinheit vorzugsweise mindestens einen Endschalter, der an einer Endstellung des Schwenkbereichs des Greifarms schaltet, um eine Positionsrückmeldung zu geben. Beispielsweise kann für beide Endstellungen des Schwenkbereichs des Greifarms jeweils ein Endschalter vorgesehen werden.

Ferner kann der Schwenkkopf einen Drehgeber (z. B. Potentiometer) aufweisen, um die Schwenkstellung des Greifarms zu ermitteln.

Darüber hinaus kann der Schwenkkopf einen Kraftaufnehmer aufweisen, der die auf den Greifarm wirkende Gegenkraft misst. Zum einen ermöglicht dies eine Kollisionserkennung, wenn die auf den Greifarm wirkende Gegenkraft plötzlich ansteigt. Zum anderen ermöglicht dies auch die Erkennung, ob das Greifwerkzeug die zu öffnende Klappe (z. B. Tür) gegriffen hat. Vorzugsweise ermöglicht dieser Kraftaufnehmer die Kraftmessung in beiden Schwenkrichtungen, d. h. für beide Greifwerkzeuge, die in unterschiedlichen Richtungen in den zugehörigen Eingriff eingeführt werden.

Weiterhin besteht im Rahmen der Erfindung die Möglichkeit, dass die Schwenkeinheit einen integrierten Positionssensor aufweist, um die Position des Greifarms und der Greifwerkzeuge relativ zu dem Eingriff an der zu öffnenden Klappe zu erfassen. Derartige Positionssensoren sind an sich aus DE 10 2014 017 855 A1 bekannt und müssen deshalb nicht detailliert beschrieben werden. An dieser Stelle ist lediglich kurz zu erwähnen, dass es sich bei dem Positionssensor beispielsweise um einen Ultraschallsensor oder einen induktiven Sensor handeln kann.

Ferner ist zu erwähnen, dass der Schwenkkopf einen bestimmten Schwenkwinkel des Greifarms ermöglicht, wobei der Schwenkwinkel vorzugsweise mindestens 5°, 10° oder 15° beträgt.

Darüber hinaus ist zu erwähnen, dass der Greifarm vorzugsweise einen proximalen Oberarm und einen distalen Unterarm aufweist, die zueinander angewinkelt sind. Beispielsweise können der proximale Oberarm und der distale Unterarm mit ihren Längsachsen einen Winkel von 2°-25°, 5°-20° oder 5°-15° einschließen. Es ist jedoch im Rahmen der Erfindung alternativ auch möglich, dass der Greifarm nicht gekrümmt ist, wie es beispielsweise auch in DE 10 2014 017 855 A1 gezeigt ist.

Weiterhin ist zu erwähnen, dass die Erfindung nicht nur Schutz beansprucht für die vorstehend beschriebene erfindungsgemäße Schwenkeinheit als einzelne Baugruppe. Vielmehr beansprucht die Erfindung auch Schutz für einen kompletten Handhabungsroboter (z. B. Türöffnerroboter) mit einer derartigen Schwenkeinheit.

Der erfindungsgemäße Handhabungsroboter ist vorzugsweise als SCARA-Roboter ausgebildet, wie es an sich von herkömmlichen Türöffnerrobotern bekannt ist und beispielsweise in DE 10 2014 017 855 A1 beschrieben wird. Dies ist vorteilhaft, weil SCARA-Roboter weniger komplex sind als 6-Achs-Roboter und weniger Bauraum benötigen.

Der erfindungsgemäße Handhabungsroboter kann zusätzlich eine senkrechte Verfahrachse aufweisen, um die komplette Schwenkeinheit in senkrechter Richtung zu verschieben. Dies kann beispielsweise sinnvoll sein, wenn der Greifarm mit den daran montierten Greifwerkzeugen von oben nach unten in ein Reinigungsgerät eingeführt werden soll. Diese Schwenkeinheit mit einer Verfahrachse kann wahlweise in einem Scara-Roboter oder in einem Handhabungsroboter integriert sein.

Ferner beansprucht die Erfindung auch Schutz für eine komplette Beschichtungsanlage (z. B. Lackieranlage) zur Beschichtung (z. B. Lackierung) von Kraftfahrzeugkarosserien, wobei diese erfindungsgemäße Beschichtungsanlage mindestens einen erfindungsgemäßen Handhabungsroboter aufweist, wie er vorstehend beschrieben wurde.

Die erfindungsgemäße Beschichtungsanlage kann zusätzlich ein Reinigungsgerät aufweisen, um die Greifwerkzeuge von Zeit zu Zeit zu reinigen. Hierzu kann der Greifarm mit den darin montierten Greifwerkzeugen durch eine Einführöffnung des Reinigungsgeräts in das Reinigungsgerät eingeführt werden. Die eigentliche Reinigung kann dann innerhalb des Reinigungsgeräts erfolgen, indem die Greifwerkzeuge beispielsweise mit Spülmittel und Pulsluft angeströmt werden. Dies geschieht vorzugsweise durch die Verwendung der Z-Achse des Scara-Roboters.

Schließlich beansprucht die Erfindung auch Schutz für ein entsprechendes Verfahren zum Öffnen und Schließen von Klappen (z. B. Türen) von Kraftfahrzeugkarosserien in einer Lackieranlage.

Im Rahmen des erfindungsgemäßen Verfahrens wird zunächst der Typ des jeweiligen Eingriffs der zu öffnenden Tür ermittelt. So kann es sich bei dem Eingriff beispielsweise um einen Ring, einen Fensterspalt oder die Innenseite der zu öffnenden Tür handeln. Darüber hinaus wird im Rahmen des erfindungsgemäßen Verfahrens ermittelt, um welchen Typ von Tür es sich handelt. So kann es sich bei der zu öffnenden Tür beispielsweise um eine herkömmliche Schwenktür oder um eine Schiebetür mit Montagescharnier handeln.

In Abhängigkeit von dem Typ des Eingriffs werden dann die passende Einführrichtung und das passende Greifwerkzeug ausgewählt.

Falls es sich bei dem Eingriff beispielsweise um einen herkömmlichen Ring an einer Schwenktür einer Kraftfahrzeugkarosserie handelt, so wird der nach unten abstehende Spitzengreifer ausgewählt und von oben nach unten in den Ring eingeführt, um die Tür zu greifen.

Das gleiche gilt, wenn es sich bei dem Eingriff um einen Fensterspalt einer Schwenktür oder Schiebetür handelt oder um die Innenseite einer Schiebetür oder um einen Ring an einer Schiebetür bzw. Schiebetür mit Ersatzscharnier.

Falls es sich bei dem Eingriff jedoch um einen Ring an einer Schiebetür handelt, so wird der nach oben stehende Spitzengreifer ausgewählt und von unten nach oben in den Ring eingeführt.

Der Typ des jeweiligen Eingriffs kann im Rahmen des erfindungsgemäßen Verfahrens beispielsweise aus der Lackieranlagensteuerung ausgelesen werden. Alternativ besteht die Möglichkeit, dass der Typ des jeweiligen Eingriffs mittels einer Kamera erfasst wird.

Weiterhin kann im Rahmen des erfindungsgemäßen Verfahrens vorgesehen werden, dass der Greifarm mit den Greifwerkzeugen in ein Reinigungsgerät eingeführt wird, um die Greifwerkzeuge zu reinigen. Hierzu kann eine zusätzliche senkrechte Verfahrachse in die Schwenkeinheit oder in den SCARA-Roboter integriert werden.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert.

Es zeigen:
- Figur 1A: eine schematische Darstellung eines erfindungsgemäßen Türöffnerroboters,
- Figur 1B: eine Perspektivansicht des Greifarms mit den Greifwerkzeugen bei dem Türöffnerroboter gemäß Figur 1A,
- Figuren 1C bis 1F: verschiedene Stellungen der Schwenkeinheit bei dem Türöffnerroboter gemäß Figur 1A,
- Figuren 2A bis 2E: Abwandlungen der Figuren 1B bis 1F mit einem Fensterspalt als Eingriff an einer zu öffnenden Tür einer Kraftfahrzeugkarosserie,
- Figuren 3A bis 3E: Abwandlungen der Figuren 2A bis 2E, wobei der Eingriff an der zu öffnenden Tür durch die Innenseite der zu öffnenden Tür gebildet wird,
- Figuren 4A bis 4E: Abwandlungen der Figuren 2A bis 2E, wobei als Eingriff ein Ring an einer Schiebetür vorgesehen ist, und das Greifwerkzeug von unten in den Ring eingeführt wird,
- Figur 5A: eine Perspektivansicht der erfindungsgemäßen Schwenkeinheit mit einem Reinigungsgerät,
- Figur 5B: eine teilweise aufgeschnittene Seitenansicht von Figur 5A,
- Figur 5C: eine Detailvergrößerung aus Figur 5B,
- Figur 5D: eine Aufsicht auf das Reinigungsgerät und die Schwenkeinheit gemäß den Figuren 5A bis 5C, sowie
- Figur 6: das erfindungsgemäße Verfahren in Form eines Flussdiagramms.

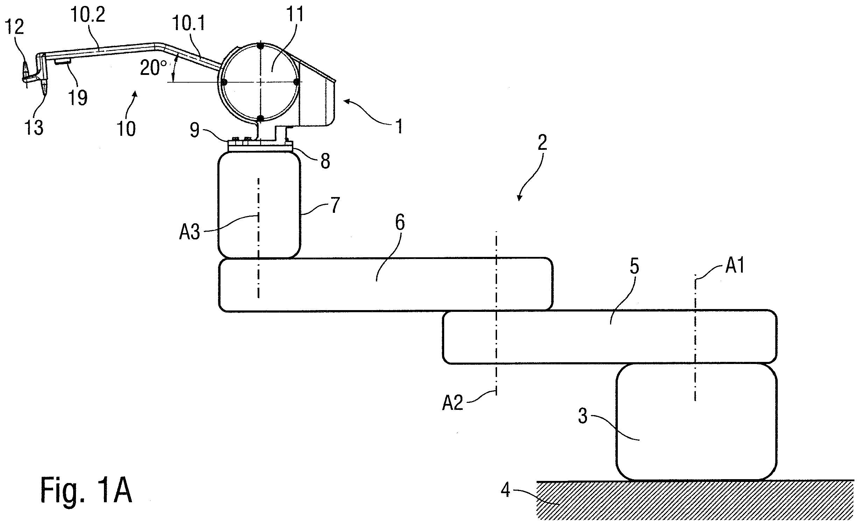

Figur 1A zeigt ein Ausführungsbeispiel einer erfindungsgemäßen Schwenkeinheit 1 an einem Türöffnerroboter 2, der hier nur schematisch dargestellt ist.

Der Türöffnerroboter 2 ist als SCARA-Roboter (SCARA: Selective Compliance Assembly Robot Arm) ausgebildet und weist zunächst eine Roboterbasis 3 auf, die beispielsweise auf einem Kabinenboden 4 einer Lackierkabine montiert sein kann.

Darüber hinaus weist der Türöffnerroboter 2 einen proximalen Roboterarm 5 und einen distalen Roboterarm 6 auf, die beide um senkrechte Drehachsen A1 bzw. A2 relativ zu der Roboterbasis 4 bzw. relativ zu dem proximalen Roboterarm 5 drehbar sind.

Am Ende des distalen Roboterarms 6 ist an der Oberseite ein Aufbau 7 angeordnet, der um eine senkrechte Drehachse A3 relativ zu dem distalen Roboterarm 6 drehbar ist und an seiner Oberseite einen Montageflansch 8 trägt.

Die Schwenkeinheit 1 weist zunächst ebenfalls einen Montageflansch 9 auf, der mit dem Montageflansch 8 des Türöffnerroboters 2 verschraubt ist.

Darüber hinaus weist die Schwenkeinheit 1 einen Greifarm 10 auf, der mittels eines Schwenkkopfs 11 relativ zu dem Montageflansch 8 in der Zeichenebene schwenkbar ist.

Der Greifarm 10 weist einen proximalen Oberarm 10.1 und einen distalen Unterarm 10.2 auf, die relativ zueinander angewinkelt sind.

Am Ende des Greifarms 10 befinden sich zwei Greifwerkzeuge 12, 13 in Form von Spitzengreifern, wobei das Greifwerkzeug 12 nach oben absteht, während das Greifwerkzeug 13 nach unten absteht.

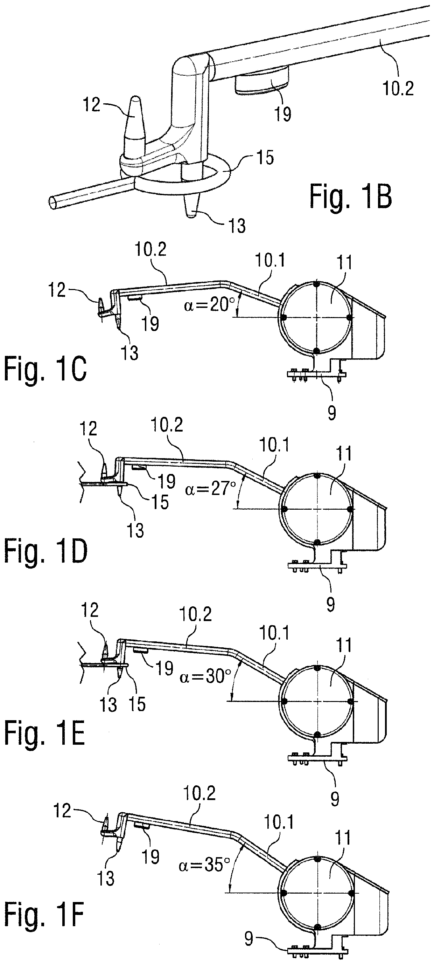

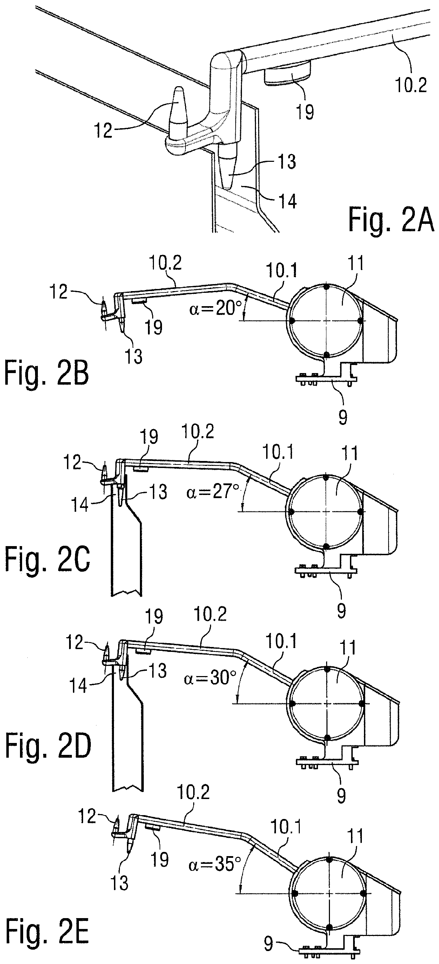

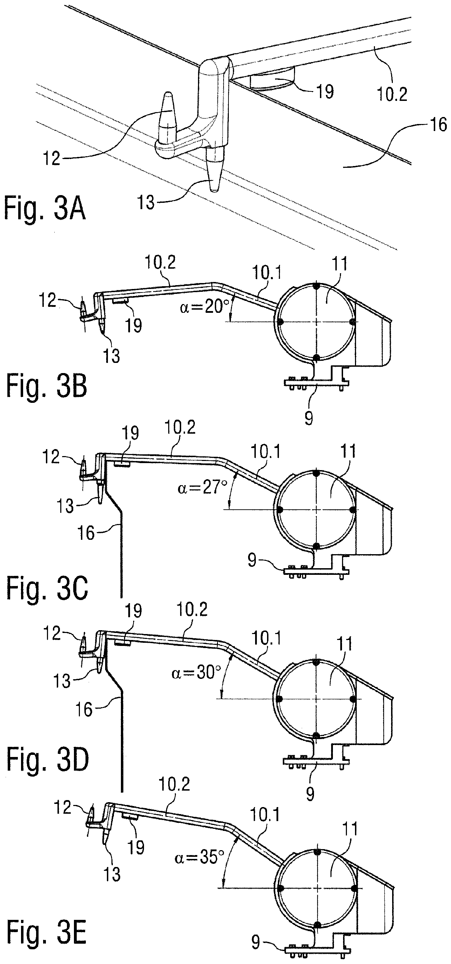

Das untere Greifwerkzeug 13 dient hierbei zum Eingreifen in einen Fensterspalt 14 (vgl. Fig. 2A), in einen Ring 15 (vgl. Fig. 1B) oder an der Innenseite 16 (vgl. Fig. 3A) einer Tür, wobei das untere Greifwerkzeug 13 von oben nach unten eingeführt wird, wie noch detailliert beschrieben wird.

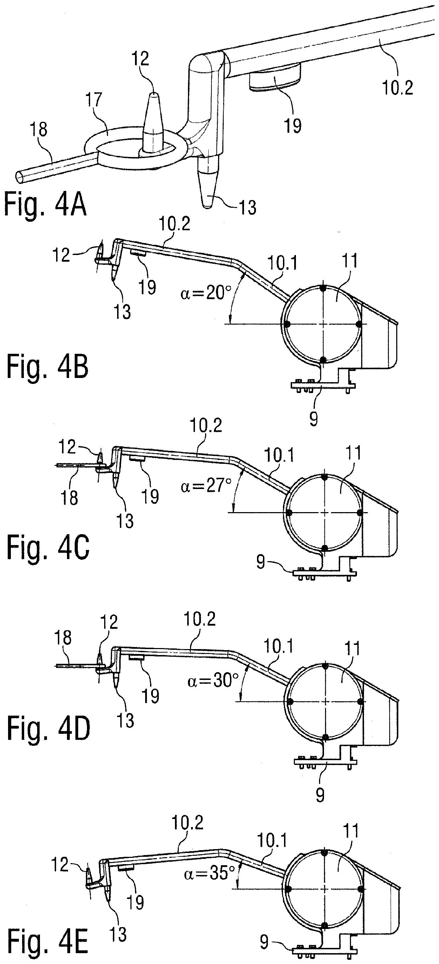

Das obere Greifwerkzeug 12 dient dagegen in neuartiger Weise zum Einführen in einen Ring 17 (vgl. Fig. 4A), der mittels einer Ringstange 18 mit einer Schiebetür verbunden ist, wobei das obere Greifwerkzeug 12 von unten nach oben in den Ring 17 eingeführt wird.

An dem distalen Unterarm 10.2 des Greifarms 10 befindet sich an der Unterseite noch ein Positionssensor 19, der die Aufgabe hat, die Positionierung der Greifwerkzeuge 12, 13 in Bezug auf den jeweiligen Eingriff zu erfassen, damit die Greifwerkzeuge 12 bzw. 13 positionsgenau eingeführt werden können. Der Positionssensor 19 ist grundsätzlich aus DE 10 2014 017 855 A1 bekannt, so dass hinsichtlich Aufbau und Funktionsweise des Positionssensors 19 auf diese Patentveröffentlichung verwiesen wird, um Wiederholungen zu vermeiden.

Figur 1B zeigt eine Eingriffsstellung, in der das untere Greifwerkzeug 13 in den Ring 15 eingeführt ist.

Die Figuren 1C bis 1F zeigen hierbei verschiedene Schwenkstellungen des Greifarms 10. So zeigt Figur 1C eine Grundstellung mit einem Anschlag eines Arretierzylinders bei einem Schwenkwinkel α=20°.

Figur 1D zeigt dagegen eine Arbeitsstellung (Eingriffsstellung) mit einem Schwenkwinkel α=27°, wobei an eine Steuerung ein Signal abgegeben wird, das anzeigt, dass die Tür gegriffen ist.

Figur 1E zeigt eine Überlaststellung mit einem Winkel α=30°. In dieser Überlaststellung wird ein Signal an eine übergeordnete Steuerung abgegeben, das anzeigt, dass eine Überlast vorliegt.

Schließlich zeigt Figur 1F eine Endlagenstellung mit einem Winkel α=35°, wobei auch in dieser Endlagenstellung ein entsprechendes Signal an einer übergeordnete Steuerung abgegeben wird.

Die Figuren 2A bis 2E zeigen Abwandlungen der Figuren 1B bis 1F, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Eingriff für das untere Greifwerkzeug 13 hierbei nicht durch den Ring 15 gebildet wird, sondern durch den Fensterspalt 14.

Die Figuren 3A bis 3E zeigen wieder Abwandlungen der Figuren 2A bis 2E, so dass zur Vermeidung von Wiederholungen auf die vorstehende Beschreibung verwiesen wird, wobei für entsprechende Einzelheit dieselben Bezugszeichen verwendet werden.

Eine Besonderheit dieses Ausführungsbeispiels besteht darin, dass der Eingriff durch eine Innenseite 16 der zu öffnenden Tür gebildet wird. Auch hierbei wird das untere Greifwerkzeug 13 jedoch von oben nach unten in den Eingriff eingeführt, d. h. an die Innenseite 16 der Tür.

Die Figuren 4A bis 4E zeigen wieder Abwandlungen der Figuren 2A bis 2E, so dass zur Vermeidung von Wiederholungen auf die vorstehende Beschreibung verwiesen wird.

Eine Besonderheit dieses Ausführungsbeispiels besteht darin, dass hierbei das obere Greifwerkzeug 12 von unten nach oben in den Ring 17 eingeführt wird, der über die Ringstange 18 mit der Schiebetür verbunden ist.

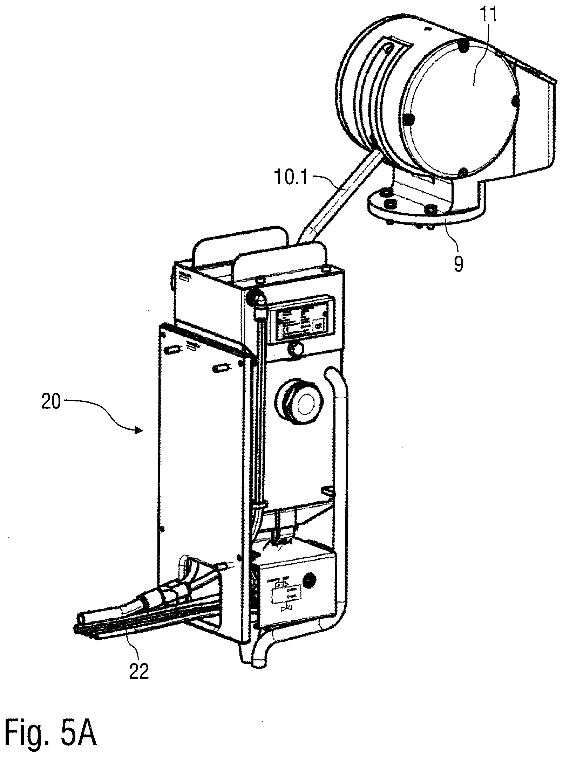

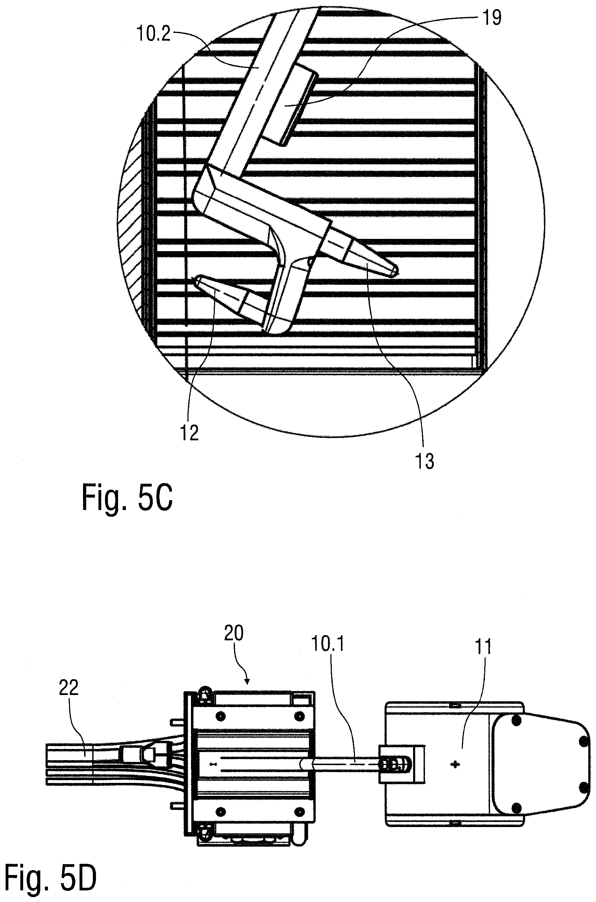

Figur 5A zeigt zusätzlich ein Reinigungsgerät 20 zum Reinigen der Greifwerkzeuge 12, 13 an dem Greifarm 10.

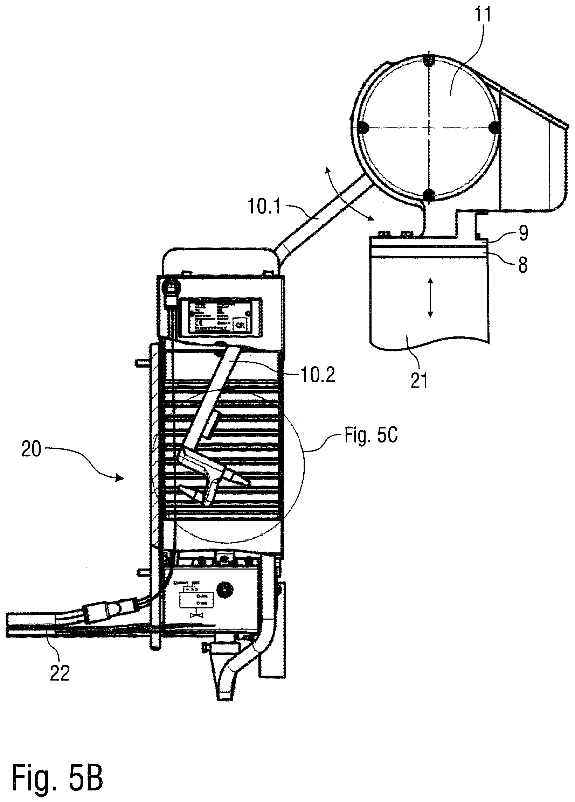

Hierzu wird der Greifarm 10 von dem Schwenkkopf nach unten geschwenkt, wie es in den Figuren 5A und 5B dargestellt ist.

Anschließend wird die Schwenkeinheit 1 dann mittels einer Verfahrachse 21 senkrecht nach unten gefahren, bis sich die Greifwerkzeuge 12, 13 innerhalb des Reinigungsgeräts 20 befinden, wie in Figur 5B dargestellt ist.

Das Reinigungsgerät 20 weist Anschlussleitungen 22 auf, über die beispielsweise Pulsluft und Spülmittel zum Reinigen der Greifwerkzeuge 12, 13 zugeführt werden können.

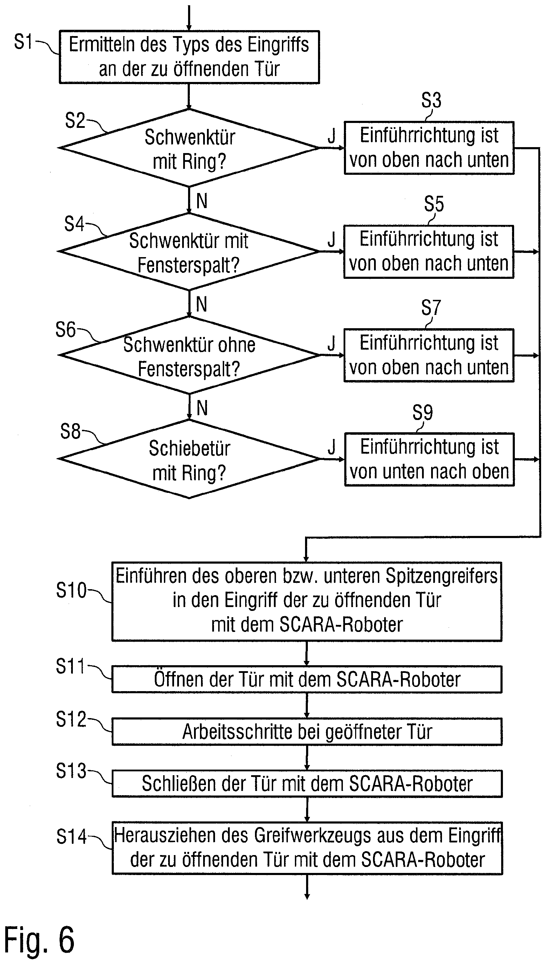

Im Folgenden wird nun das erfindungsgemäße Verfahren anhand des Flussdiagramms gemäß Figur 6 erläutert.

In einem ersten Schritt S1 wird zunächst der Typ des Eingriffs an der zu öffnenden Tür ermittelt.

Falls es sich um eine herkömmliche Schwenktür mit einem Ring 15 handelt, so wird in einem Schritt S2 zu einem Schritt S3 abgezweigt, in dem festgelegt wird, dass die Einführrichtung für die Greifwerkzeuge von oben nach unten gerichtet ist. Darüber hinaus wird in dem Schritt S3 auch das untere Greifwerkzeug 13 ausgewählt.

Andernfalls wird in einem Schritt S4 geprüft, ob es sich bei dem Eingriff um den Fensterspalt 14 an der herkömmlichen Schwenktür handelt.

Falls dies der Fall ist, so wird in einem Schritt S5 festgelegt, dass das untere Greifwerkzeug 13 ausgewählt und dann von oben nach unten in den Fensterspalt 14 eingeführt wird.

Andernfalls wird in einem Schritt S6 geprüft, ob es sich um eine Schwenktür ohne einen Fensterspalt handelt.

Falls dies der Fall ist, so wird in einem Schritt S7 festgelegt, dass die Einführrichtung von oben nach unten gerichtet ist und als Eingriff die Innenseite 16 der zu öffnenden Tür dient.

Andernfalls wird in einem Schritt S8 geprüft, ob es sich bei der zu öffnenden Tür um eine Schiebetür mit dem Ring 17 handelt.

Falls dies der Fall ist, so wird in einem Schritt S9 festgelegt, dass die Einführrichtung von unten nach oben gerichtet ist, wobei das obere Greifwerkzeug 12 ausgewählt wird.

In einem nächsten Schritt S10 wird dann das ausgewählte Greifwerkzeug 12 bzw. 13 in der ausgewählten Einführrichtung in den Eingriff der zu öffnenden Tür eingeführt.

Anschließend wird die Tür dann in einem Schritt S11 geöffnet.

Bei geöffneter Tür können dann in einem Schritt S12 weitere Arbeitsschritte ausgeführt werden, wie beispielsweise eine Innenlackierung der Kraftfahrzeugkarosserie.

In einem Schritt S13 wird die Tür dann wieder geschlossen.

Schließlich wird das jeweilige Greifwerkzeug 12 bzw. 13 dann in einem Schritt S14 wieder aus dem Eingriff herausgezogen.

### Bezugszeichenliste:

- 1: Schwenkeinheit
- 2: Türöffnerroboter
- 3: Roboterbasis des Türöffnerroboters
- 4: Kabinenboden der Lackierkabine
- 5: Proximaler Roboterarm ("Arm 1") des Türöffnerroboters
- 6: Distaler Roboterarm ("Arm 2") des Türöffnerroboters
- 7: Aufbau auf dem distalen Roboterarm
- 8: Montageflansch des Türöffnerroboters
- 9: Montageflansch der Schwenkeinheit
- 10: Greifarm
- 10.1: Oberarm des Greifarms
- 10.2: Unterarm des Greifarms
- 11: Schwenkkopf
- 12: Oberes Greifwerkzeug (Spitzengreifer)
- 13: Unteres Greifwerkzeug (Spitzengreifer)
- 14: Fensterspalt der Tür
- 15: Ring an herkömmlicher Schwenktür
- 16: Innenseite der Tür
- 17: Ring
- 18: Ringstange
- 19: Positionssensor am Greifarm
- 20: Reinigungsgerät
- 21: Verfahrachse
- 22: Anschlussleitungen des Reinigungsgeräts
- A1: Drehachse des proximalen Roboterarms
- A2: Drehachse des distalen Roboterarms
- A3: Drehachse der Schwenkeinheit

## Patentansprüche

1. Schwenkeinheit (1) zur Montage an einem Handhabungsroboter (2) zum Öffnen und Schlie-ßen einer Klappe einer Kraftfahrzeugkarosserie, insbesondere für einen Türöffnerroboter (2) zum Öffnen und Schließen einer Tür einer Kraftfahrzeugkarosserie bei einer Lackierung der Kraftfahrzeugkarosserie, mit
a) einem Montageflansch (9) zur Montage der Schwenkeinheit (1) an dem Handhabungsroboter (2),
b) einem Greifarm (10),
c) einem ersten Greifwerkzeug (13) zum Greifen eines Eingriffs (14, 15, 16), insbesondere eine Rings (15) oder eines Fensterspalts (14), an der zu öffnenden Klappe der Kraftfahrzeugkarosserie, wobei das erste Greifwerkzeug (13) an dem Greifarm (10) montiert ist, insbesondere am Ende des Greifarms (10), und
d) einem Schwenkkopf (11) zum Schwenken des Greifarms (10) mit dem ersten Greifwerkzeug relativ zu dem Montageflansch (9) zwischen
d1) einer Ausgangsstellung, in der das erste Greifwerkzeug (13) nicht in den Eingriff (14, 15, 16) an der zu öffnenden oder zu schließenden Klappe der Kraftfahrzeugkarosserie eingreift, und
d2) einer Eingriffsstellung, in der das erste Greifwerkzeug (13) in den Eingriff (14, 15, 16) an der zu öffnenden oder zu schließenden Klappe der Kraftfahrzeugkarosserie eingreift,
**dadurch gekennzeichnet,**
e) **dass** an dem Greifarm (10) auch ein zweites Greifwerkzeug (12) zum Greifen eines Eingriffs (17) an der zu öffnenden Klappe der Kraftfahrzeugkarosserie montiert ist, insbesondere am Ende des Greifarms (10), und
f) **dass** die beiden Greifwerkzeuge (12, 13) an dem Greifarm (10) dazu ausgelegt sind, um in unterschiedlichen Einführrichtungen in den Eingriff (14, 15, 16) an der zu öffnenden Klappe der Kraftfahrzeugkarosserie eingeführt zu werden, insbesondere von oben nach unten bei dem ersten Greifwerkzeug (13) und von unten nach oben bei dem zweiten Greifwerkzeug (12), und
g) **dass** die beiden Greifwerkzeuge (12, 13) als Spitzengreifer ausgebildet sind und in entgegengesetzten Richtungen von dem Greifarm (10) abstehen, insbesondere nach oben bzw. nach unten.

2. Schwenkeinheit (1) nach Anspruch 1, **dadurch gekennzeichnet,**
a) **dass** der Schwenkkopf (11) zum Schwenken des Greifarms (10) einen Schwenkantrieb aufweist, insbesondere mit einem Pneumatikzylinder, und/oder
b) **dass** der Schwenkkopf (11) zur Ermittlung der Schwenkstellung mindestens einen Endschalter aufweist, der an einer Endstellung des Schwenkbereichs schaltet, und/oder
c) **dass** der Schwenkkopf (11) zur Ermittlung der Schwenkstellung einen Drehgeber aufweist, insbesondere ein Potentiometer, und/oder
d) **dass** der Schwenkkopf (11) einen Kraftaufnehmer aufweist, der die auf den Greifarm (10) wirkende Gegenkraft misst und zwar in beiden Schwenkrichtungen, und/oder
e) **dass** an dem Greifarm (10) zur Erfassung der Position des Greifarms (10) relativ zu dem Eingriff (14, 15, 16) an der zu öffnenden Klappe der Kraftfahrzeugkarosserie ein Positionssensor montiert ist, insbesondere ein Ultraschallsensor oder ein induktiver Sensor, und/oder
f) **dass** der Schwenkkopf (11) einen Schwenkwinkel von mindestens 5°, 10° oder 15° erlaubt, und/oder
g) **dass** der Greifarm (10) einen proximalen Oberarm und einen distalen Unterarm aufweist, die zueinander angewinkelt sind, insbesondere mit einem Winkel von 2°-25°, 5°-20°, 5°-15°.

3. Handhabungsroboter (2) zum Öffnen oder Schließen einer Klappe einer Kraftfahrzeugkarosserie, insbesondere Türöffnerroboter (2) zum Öffnen oder Schließen einer Tür der Kraftfahrzeugkarosserie, insbesondere als SCARA-Roboter, **dadurch gekennzeichnet, dass** an dem Handhabungsroboter (2) eine Schwenkeinheit (1) nach einem der vorhergehenden Ansprüche montiert ist.

4. Handhabungsroboter (2) nach Anspruch 3, **gekennzeichnet durch** eine senkrechte Verfahrachse (21) zum senkrechten Verschieben der Schwenkeinheit (1), insbesondere zum Einführen des Greifarms (10) mit den Greifwerkzeugen (12, 13) in ein Reinigungsgerät (20).

5. Beschichtungsanlage zur Beschichtung von Kraftfahrzeugkarosserien, insbesondere Lackieranlage zur Lackierung der Kraftfahrzeugkarosserien, mit einem Handhabungsroboter (2) zum Öffnen oder Schließen einer Klappe einer Kraftfahrzeugkarosserie, **dadurch gekennzeichnet, dass** der Handhabungsroboter (2) nach Anspruch 3 oder 4 ausgebildet ist.

6. Beschichtungsanlage nach Anspruch 5, **gekennzeichnet durch** ein Reinigungsgerät (20) zur Reinigung der Greifwerkzeuge (12, 13) mit einer Einführöffnung zum Einführen des Greifarms (10) mit den Greifwerkzeugen (12, 13) in das Reinigungsgerät (20) für eine Reinigung innerhalb des Reinigungsgeräts (20).

7. Verfahren zum Öffnen einer Klappe, insbesondere einer Tür, einer Kraftfahrzeugkarosserie, insbesondere bei einem Lackiervorgang, nämlich mittels einer Beschichtungsanlage nach einem der Ansprüche 5 oder 6, mit den folgenden Schritten:
a) Greifen eines Eingriffs (14, 15, 16) an der zu öffnenden Klappe der Kraftfahrzeugkarosserie mittels eines Handhabungsroboters (2), insbesondere mittels eines SCARA-Roboters, und
b) Öffnen der von dem Handhabungsroboter (2) gegriffenen Klappe mittels des Handhabungsroboters (2),
**gekennzeichnet durch** folgende Schritte:
c) Ermitteln des Typs des Eingriffs (14, 15, 16, 17) an der zu öffnenden Klappe,
d) Auswahl eines von mehreren an dem Handhabungsroboter (2) montierten Greifwerkzeugen (12, 13) in Abhängigkeit von dem ermittelten Typ des Eingriffs (14, 15, 16, 17) an der zu öffnenden Klappe,
e) Auswahl einer von mehreren Einführrichtungen in Abhängigkeit von dem ermittelten Typ des Eingriffs (14, 15, 16, 17) an der zu öffnenden Klappe, und
f) Einführen des ausgewählten Greifwerkzeugs (12, 13) in der ausgewählten Einführrichtung in den Eingriff (14, 15, 16, 17) an der zu öffnenden Klappe der Kraftfahrzeugkarosserie.

8. Verfahren nach Anspruch 7, **dadurch gekennzeichnet, dass** die zu öffnende Klappe eine Tür der Kraftfahrzeugkarosserie ist und der Eingriff an der zu öffnenden Tür der Kraftfahrzeugkarosserie einem der folgenden Typen angehört:
a) Ring (15) als zusätzliches Betriebsmittel an einer Schwenktür der Kraftfahrzeugkarosserie,
b) Fensterspalt (14) an einer Schwenktür der Kraftfahrzeugkarosserie,
c) Türinnenseite (16) einer Schwenktür der Kraftfahrzeugkarosserie,
d) Ring (17) als zusätzliches Betriebsmittel an einer Schiebetür der Kraftfahrzeugkarosserie.

9. Verfahren nach Anspruch 7 oder 8, **dadurch gekennzeichnet, dass** folgende Einführrichtungen des Greifwerkzeugs (12, 13) zur Auswahl stehen:
a) Von oben nach unten,
b) von unten nach oben.

10. Verfahren nach Anspruch 9, **dadurch gekennzeichnet,**
a) **dass** bei einem Ring (15) als Eingriff an einer Schwenktür ein nach unten abstehender Spitzengreifer (13) als Greifwerkzeug ausgewählt und von oben nach unten in den Ring (15) eingeführt wird, und/oder
b) **dass** bei einem Fensterspalt (14) als Eingriff an einer Schwenktür ein nach unten abstehender Spitzengreifer (13) als Greifwerkzeug ausgewählt und von oben nach unten in den Fensterspalt (14) eingeführt wird, und/oder
c) **dass** bei einer Türinnenseite (16) als Eingriff an einer Schwenktür ein nach unten abstehender Spitzengreifer (13) als Greifwerkzeug ausgewählt und von oben nach unten innen hinter die Türinnenseite (16) eingeführt wird, und/oder
d) **dass** bei einem Ring (17) als Eingriff an einer Schiebetür ein nach oben abstehender Spitzengreifer als Greifwerkzeug (12) ausgewählt und von unten nach oben in den Ring (17) eingeführt wird.

11. Verfahren nach einem der Ansprüche 7 bis 10, **dadurch gekennzeichnet,**
a) **dass** der Typ des Eingriffs (14, 15, 16, 17) an der zu öffnenden Tür aus einer Lackieranlagensteuerung ausgelesen wird, oder
b) **dass** der Typ des Eingriffs (14, 15, 16, 17) an der zu öffnenden Tür mittels eines Sensors ermittelt wird, insbesondere mittels einer Kamera.

12. Verfahren nach einem der Ansprüche 7 bis 11, **gekennzeichnet durch** folgenden Schritt: Einführen des Greifarms (10) mit den Greifwerkzeugen in ein Reinigungsgerät zum Reinigen der Greifwerkzeuge innerhalb des Reinigungsgeräts.

## Claims

1. Pivoting unit (1) for mounting on a handling robot (2) for opening and closing a flap of a motor vehicle body, in particular for a door-opening robot (2) for opening and closing a door of a motor vehicle body during painting of the motor vehicle body, with
a) a mounting flange (9) for mounting the pivoting unit (1) on the handling robot (2),
b) a gripper arm (10),
c) a first gripping tool (13) for gripping an engagement (14, 15, 16), in particular a ring (15) or a window gap (14), on the openable flap of the motor vehicle body, wherein the first gripping tool (13) is mounted on the gripper arm (10), in particular at the end of the gripper arm (10), and
d) a pivoting head (11) for pivoting the gripper arm (10) with the first gripping tool relative to the mounting flange (9) between
d1) an initial position in which the first gripping tool (13) does not engage in the engagement (14, 15, 16) on the flap of the motor vehicle body to be opened or closed, and
d2) an engagement position in which the first gripping tool (13) engages in the engagement (14, 15, 16) on the flap of the motor vehicle body which can be opened or closed,
**characterized in**
e) **that** a second gripping tool (12) for gripping an engagement (17) on the openable flap of the motor vehicle body is also mounted on the gripper arm (10), in particular at the end of the gripper arm (10), and
f) **that** the two gripping tools (12, 13) on the gripper arm (10) are designed to be inserted in different insertion directions into the engagement (14, 15, 16) on the openable flap of the motor vehicle body, in particular from top to bottom in the case of the first gripping tool (13) and from bottom to top in the case of the second gripping tool (12), and
g) **that** the two gripping tools (12, 13) are designed as tip grippers and project in opposite directions from the gripper arm (10), in particular upwards and downwards.

2. Pivoting unit (1) according to claim 1, **characterized in**
a) **that** the pivoting head (11) for pivoting the gripper arm (10) has a pivoting drive, in particular with a pneumatic cylinder, and/or
b) **that** the pivoting head (11) has at least one limit switch for determining the pivoting position, which switches at an end position of the pivoting range, and/or
c) **that** the pivoting head (11) has a rotary encoder, in particular a potentiometer, for determining the pivoting position, and/or
d) **that** the pivoting head (11) has a force transducer which measures the counter force acting on the gripper arm (10) in both pivoting directions, and/or
e) **that** a position sensor, in particular an ultrasonic sensor or an inductive sensor, is mounted on the gripper arm (10) for detecting the position of the gripper arm (10) relative to the engagement (14, 15, 16) on the flap of the motor vehicle body which is to be opened, and/or
f) **that** the pivoting head (11) permits a pivoting angle of at least 5°, 10° or 15°, and/or
g) **that** the gripper arm (10) has a proximal upper arm and a distal lower arm which are angled relative to each other, in particular at an angle of 2°-25°, 5°-20°, 5°-15°.

3. Handling robot (2) for opening or closing a flap of a motor vehicle body, in particular door-opening robot (2) for opening or closing a door of the motor vehicle body, in particular as SCARA robot, **characterized in that** a pivoting unit (1) according to one of the preceding claims is mounted on the handling robot (2).

4. Handling robot (2) according to claim 3, **characterized by** a vertical travel axis (21) for vertical displacement of the pivoting unit (1), in particular for insertion of the gripper arm (10) with the gripping tools (12, 13) into a cleaning device (20).

5. Coating installation for coating motor vehicle bodies, in particular a painting installation for painting the motor vehicle bodies, with a handling robot (2) for opening or closing a flap of a motor vehicle body, **characterized in that** the handling robot (2) is designed according to claim 3 or 4.

6. Coating installation according to claim 5, **characterized by** a cleaning device (20) for cleaning the gripping tools (12, 13) with an insertion opening for inserting the gripper arm (10) with the gripping tools (12, 13) into the cleaning device (20) for cleaning inside the cleaning device (20).

7. Method for opening a flap, in particular a door, of a motor vehicle body, in particular during a painting process, namely by means of a coating installation according to one of claims 5 or 6, comprising the following steps:
a) gripping an engagement (14, 15, 16) on the flap of the motor vehicle body to be opened by means of a handling robot (2), in particular by means of a SCARA robot, and
b) opening the flap gripped by the handling robot (2) by means of the handling robot (2),
**characterized by** the following steps:
c) determining the type of engagement (14, 15, 16, 17) on the flap to be opened,
d) selection of one of several gripping tools (12, 13) mounted on the handling robot (2) depending on the determined type of engagement (14, 15, 16, 17) on the flap to be opened,
e) selecting one of several insertion directions depending on the type of engagement (14, 15, 16, 17) determined on the openable flap; and
f) inserting the selected gripping tool (12, 13) in the selected insertion direction into the engagement (14, 15, 16, 17) on the openable flap of the motor vehicle body.

8. Method according to claim 7, **characterized in that** the openable flap is a door of the motor vehicle body and the engagement on the openable door of the motor vehicle body is of one of the following types:
a) ring (15) as additional operating means on a swing door of the motor vehicle body,
b) window gap (14) on a hinged door of the motor vehicle body,
c) the inside of a door (16) of a hinged door of the motor vehicle body,
d) ring (17) as an additional operating device on a sliding door of the motor vehicle body.

9. Method according to claim 7 or 8, **characterized in that** the following insertion directions of the gripping tool (12, 13) are available for selection:
a) from top to bottom,
b) from bottom to top.

10. Method according to claim 9, **characterized in**
a) **that** in the case of a ring (15) as an engagement on a swing door, a downwardly projecting tip gripper (13) is selected as a gripping tool and is inserted into the ring (15) from top to bottom, and/or
b) **that**, in the case of a window gap (14), a downwardly projecting tip gripper (13) is selected as a gripping tool for engagement on a swing door and is introduced into the window gap (14) from top to bottom, and/or
c) **that**, in the case of an inner side (16) of a door, a downwardly protruding tip gripper (13) is selected as a gripping tool for engagement on a swing door and is inserted from top to bottom behind the inner side (16) of the door, and/or
d) **that** in the case of a ring (17) as an engagement on a sliding door, an upwardly projecting tip gripper is selected as a gripping tool (12) and is inserted into the ring (17) from bottom to top.

11. Method according to one of claims 7 to 10, **characterized in**
a) **that** the type of engagement (14, 15, 16, 17) on the openable door is read from a paint shop controller, or
b) **that** the type of engagement (14, 15, 16, 17) on the door to be opened is determined by means of a sensor, in particular by means of a camera.

12. Method according to any one of claims 7 to 11, **characterized by** the following step:
Inserting the gripper arm (10) with the gripping tools into a cleaning device for cleaning the gripping tools within the cleaning device.

## Revendications

1. Unité de pivotement (1) destinée à être montée sur un robot manipulateur (2) pour l'ouverture et la fermeture d'un clapet d'une carrosserie de véhicule automobile, plus particulièrement pour un robot d'ouverture de portière (2), pour l'ouverture et la fermeture d'une portière d'une carrosserie de véhicule automobile lors d'une peinture de la carrosserie de véhicule automobile, avec
a) une bride de montage (9) pour le montage de l'unité de pivotement (1) sur le robot manipulateur (2),
b) un bras de préhension (10),
c) un premier outil de préhension (13) pour la préhension d'un emboîtement (14, 15, 16), plus particulièrement d'un anneau (15) ou d'un interstice de fenêtre (14), sur le clapet à ouvrir de la carrosserie de véhicule automobile, dans lequel le premier outil de préhension (13) est monté sur le bras de préhension (10), plus particulièrement à l'extrémité du bras de préhension (10) et
d) une tête de pivotement (11) pour le pivotement du bras de préhension (10) avec le premier outil de préhension par rapport à la bride de montage (9) entre
d1) une position initiale dans laquelle le premier outil de préhension (13) ne s'emboîte pas dans l'emboîtement (14, 15, 16) au niveau du clapet à ouvrir ou à fermer de la carrosserie de véhicule automobile et
d2) une position d'emboîtement dans laquelle le premier outil de préhension (13) s'emboîte dans l'emboîtement (14, 15, 16) au niveau du clapet à ouvrir ou à fermer de la carrosserie de véhicule automobile,
**caractérisée en ce que**
e) sur le bras de préhension (10), est également monté un deuxième outil de préhension (12) pour la préhension d'un emboîtement (17) au niveau du clapet à ouvrir de la carrosserie de véhicule automobile, plus particulièrement au niveau de l'extrémité du bras de préhension (10), et
f) les deux outils de préhension (12, 13) sur le bras de préhension (10) sont conçus pour être introduits, dans différentes directions d'introduction, dans l'emboîtement (14, 15, 16) au niveau du clapet à ouvrir de la carrosserie de véhicule automobile, plus particulièrement du haut vers le bas pour le premier outil de préhension (13) et du bas vers le haut pour le deuxième outil de préhension (12) et
g) les deux outils de préhension (12, 13) sont conçus comme des préhenseurs à pointes et s'éloignent dans des directions opposées du bras de préhension (10), plus particulièrement vers le haut, respectivement vers le bas.

2. Unité de pivotement (1) selon la revendication 1, **caractérisée en ce que**
a) la tête de pivotement (11) comprend, pour le pivotement du bras de préhension (10), un entraînement de pivotement, plus particulièrement avec un vérin pneumatique et/ou
b) la tête de pivotement (11) comprend, pour la détermination de la position de pivotement, au moins un capteur de fin de course qui se déclenche à une position finale de la zone de pivotement et/ou
c) la tête de pivotement (11) comprend, pour la détermination de la position de pivotement, un capteur rotatif, plus particulièrement un potentiomètre et/ou
d) la tête de pivotement (11) comprend un capteur de force qui mesure la force antagoniste agissant sur le bras de préhension (10), à savoir dans les deux directions de pivotement et/ou
e) sur le bras de préhension (10), pour la mesure de la position du bras de préhension (10) par rapport à l'emboîtement (14, 15, 16), sur le clapet à ouvrir de la carrosserie de véhicule automobile, est monté un capteur de position, plus particulièrement un capteur à ultrasons ou un capteur inductif et/ou
f) la tête de pivotement (11) permet un angle de pivotement d'au moins 5°, 10° ou 15° et/ou
g) le bras de préhension (10) comprend un bras supérieur proximal et un bras inférieur distal, qui sont inclinés l'un par rapport à l'autre, plus particulièrement avec un angle de 2° - 25°, 5° - 20°, 5° - 15°.

3. Robot manipulateur (2) pour l'ouverture ou la fermeture d'un clapet d'une carrosserie de véhicule automobile, plus particulièrement robot d'ouverture de portière (2) pour l'ouverture et la fermeture d'une portière de la carrosserie de véhicule automobile, plus particulièrement un robot SCARA, **caractérisé en ce que**, sur le robot manipulateur (2), est montée une unité de pivotement (1) selon l'une des revendications précédentes.

4. Robot manipulateur (2) selon la revendication 3, **caractérisé par** un axe de déplacement vertical (21) pour le coulissement vertical de l'unité de pivotement (1), plus particulièrement pour l'introduction du bras de préhension (10) avec les outils de préhension (12, 13) dans un appareil de nettoyage (20).

5. Installation de revêtement pour le revêtement de carrosseries de véhicules automobiles, plus particulièrement pour la peinture des carrosseries de véhicules automobiles, avec un robot manipulateur (2) pour l'ouverture ou la fermeture d'un clapet d'une carrosserie de véhicule automobile, **caractérisé en ce que** le robot manipulateur (2) est conçu selon la revendication 3 ou 4.

6. Installation de revêtement selon la revendication 5, **caractérisé par** un appareil de nettoyage (20) pour le nettoyage des outils de préhension (12, 13) avec une ouverture d'introduction pour l'introduction du bras de préhension (10) avec les outils de préhension (12, 13) dans l'appareil de nettoyage (20) pour un nettoyage à l'intérieur de l'appareil nettoyage (20).

7. Procédé pour l'ouverture d'un clapet, plus particulièrement d'une portière d'une carrosserie de véhicule automobile, plus particulièrement lors d'un processus de peinture, notamment au moyen d'une installation de revêtement selon l'une des revendications 5 ou 6, avec les étapes suivantes :
a) préhension d'un emboîtement (14, 15, 16) au niveau du clapet à ouvrir de la carrosserie de véhicule automobile au moyen d'un robot manipulateur (2), plus particulièrement au moyen d'un robot SCARA et
b) ouverture du clapet saisi par le robot manipulateur (2) au moyen du robot manipulateur (2),
**caractérisé par** les étapes suivantes :
c) détermination du type d'emboîtement (14, 15, 16, 17) sur le clapet à ouvrir,
d) sélection d'un parmi plusieurs outils de préhension (12, 13) montés sur le robot manipulateur (2) en fonction du type déterminé d'emboîtement (14, 15, 16, 17) au niveau du clapet à ouvrir,
e) sélection d'une parmi plusieurs directions d'introduction en fonction du type déterminé d'emboîtement (14, 15, 16, 17) sur le clapet à ouvrir et
f) introduction de l'outil de préhension (12, 13) sélectionné dans la direction d'introduction sélectionnée dans l'emboîtement (14, 15, 16, 17) sur le clapet à ouvrir de la carrosserie de véhicule automobile.

8. Procédé selon la revendication 7, **caractérisé en ce que** le clapet à ouvrir est une portière de la carrosserie du véhicule automobile et l'emboîtement sur la portière à ouvrir de la carrosserie de véhicule automobile appartient à un des types suivants :
a) anneau (15) en tant qu'équipement supplémentaire sur une porte pivotante de la carrosserie de véhicule automobile,
b) interstice de fenêtre (14) sur la porte pivotante de la carrosserie de véhicule automobile,
c) face interne de porte (16) d'une porte pivotante de la carrosserie de véhicule automobile,
d) anneau (17) en tant qu'équipement supplémentaire sur une porte coulissante de la carrosserie de véhicule automobile.

9. Procédé selon la revendication 7 ou 8, **caractérisé en ce que** les directions d'introduction suivantes de l'outil de préhension (12, 13) peuvent être choisies :
a) du haut vers le bas,
b) du bas vers le haut.

10. Procédé selon la revendication 9, **caractérisé en ce que**
a) pour un anneau (15) comme emboîtement sur une porte pivotante, un préhenseur à pointe (13) s'étendant vers le bas est choisi comme outil de préhension et est introduit du haut vers le bas dans l'anneau (15) et/ou
b) pour un interstice de fenêtre (14) comme emboîtement sur une porte pivotante, un préhenseur à pointe (13) s'étendant vers le bas est choisi comme outil de préhension et est introduit du haut vers le bas dans l'interstice de fenêtre (14) et/ou
c) pour une face interne de porte (16) comme emboîtement sur une porte pivotante, un préhenseur à pointe (13) s'étendant vers le bas est choisi comme outil de préhension et est introduit du haut vers le bas, à l'intérieur derrière la face interne de porte (16) et/ou
d) pour un anneau (17) comme emboîtement sur une porte coulissante, un préhenseur à pointe s'étendant vers le haut est choisi comme outil de préhension (12) et est introduit du bas vers le haut dans l'anneau (17).

11. Procédé selon l'une des revendications 7 à 10, **caractérisé en ce que**
a) le type d'emboîtement (14, 15, 16, 17) sur la porte à ouvrir est lu dans une commande d'installation de peinture ou
b) le type d'emboîtement (14, 15, 16, 17) sur la porte à ouvrir est déterminé au moyen d'un capteur, plus particulièrement au moyen d'une caméra.

12. Procédé selon l'une des revendications 7 à 11, caractérisé l'étape suivante :
introduction du bras de préhension (10) avec les outils de préhension dans un appareil de nettoyage pour le nettoyage des outils de préhension à l'intérieur de l'appareil de nettoyage.
